# EUROPEAN PATENT APPLICATION

(11) **EP 4 852 559 A1**
(43) Date of publication of application: **09.12.2026**
(21) Application number: 24921029.5
(22) Date of filing: 02.02.2024
(51) Int. Cl.: H04W 72/0446

(54) **RESOURCE DETERMINATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); ZHANG, Yi, Dongguan, Guangdong 523860 (CN); XU, Jing, Dongguan, Guangdong 523860 (CN)
(74) Representative: Mewburn Ellis LLP
(86) International application number: PCT/CN2024/075591
(87) International publication number: WO 2025/160975

(57) **Abstract**

A method and apparatus for resource determination, a device, and a storage medium are provided, which relate to the field of communication technologies. The method is performed by a terminal device and includes the following. *N* first time-domain units are determined, where a first frequency-domain resource corresponding to each of the *N* first time-domain units contains a first subband, a type of the first subband is a first type, the first type is uplink (UL) or downlink (DL), and *N* is a positive integer (310). First information is received, where the first information indicates a type of *M* time-domain units among the *N* first time-domain units, the *M* time-domain units satisfy a predefined restriction, and *M* is a positive integer (320). The terminal device can determine at least one first time-domain unit from the *N* first time-domain units based on the type of the *M* time-domain units indicated by the first information, where the at least one first time-domain unit is configured with the first subband. With the predefined restriction, the terminal device and a network device can have a consistent understanding of the *M* time-domain units, thereby avoiding a situation where communication cannot be performed on the *M* time-domain units.

## Description

### TECHNICAL FIELD

This disclosure relates to the field of communication technologies, in particular to a method and apparatus for resource determination, a device, and a storage medium.

### BACKGROUND

To overcome issues such as weak uplink (UL) coverage, high UL latency, and insufficient UL capacity caused by limited UL resource allocation in a communication system, cross-division duplex (XDD) technology has been introduced in the related art, i.e., simultaneous data transmission and reception can be performed on different subbands corresponding to the same time-domain unit. In the related art, a UL subband can only be configured within a frequency-domain bandwidth corresponding to a downlink (DL) time-domain unit or a frequency-domain bandwidth corresponding to a flexible time-domain unit. However, the flexible time-domain unit may subsequently be configured as a UL time-domain unit or a DL time-domain unit. If the UL subband is configured for the flexible time-domain unit, and the flexible time-domain unit is subsequently configured as a UL time-domain unit, then how to determine a time-domain unit for which a UL subband is configured requires further discussion and research.

### SUMMARY

A method and apparatus for resource determination, a device, and a storage medium are provided in the disclosure. Technical solutions are as follows.

According to an aspect of embodiments of the disclosure, a method for resource determination is provided. The method is performed by a terminal device and includes the following. *N* first time-domain units are determined, where a first frequency-domain resource corresponding to each of the *N* first time-domain units contains a first subband, a type of the first subband is a first type, the first type is uplink (UL) or downlink (DL), and *N* is a positive integer. First information is received, where the first information indicates a type of *M* time-domain units among the *N* first time-domain units, the *M* time-domain units satisfy a predefined restriction, and *M* is a positive integer.

According to an aspect of embodiments of the disclosure, a method for resource determination is provided. The method is performed by a network device and includes the following. First information is sent to a terminal device, where the first information indicates a type of *M* time-domain units among *N* first time-domain units, the *M* time-domain units satisfy a predefined restriction, a first frequency-domain resource corresponding to each of the *N* first time-domain unit contains a first subband, a type of the first subband is a first type, the first type is UL or DL, and *M* and *N* are positive integers.

According to an aspect of embodiments of the disclosure, an apparatus for resource determination is provided. The apparatus includes a processing module and a receiving module. The processing module is configured to determine *N* first time-domain units, where a first frequency-domain resource corresponding to each of the *N* first time-domain units contains a first subband, a type of the first subband is a first type, the first type is UL or DL, and *N* is a positive integer. The receiving module is configured to receive first information, where the first information indicates a type of *M* time-domain units among the *N* first time-domain units, the *M* time-domain units satisfy a predefined restriction, and *M* is a positive integer.

According to an aspect of embodiments of the disclosure, an apparatus for resource determination is provided. The apparatus includes a sending module. The sending module is configured to send first information to a terminal device, where the first information indicates a type of *M* time-domain units among *N* first time-domain units, the *M* time-domain units satisfy a predefined restriction, a first frequency-domain resource corresponding to each of the *N* first time-domain unit contains a first subband, a type of the first subband is a first type, the first type is UL or DL, and *M* and *N* are positive integers.

According to an aspect of embodiments of the disclosure, a communication device is provided. The communication device includes a processor and a memory. The memory is configured to store a computer program. The processor is configured to execute the computer program to implement the method for resource determination. The communication device may be a terminal device or a network device.

According to an aspect of embodiments of the disclosure, a computer-readable storage medium is provided. The storage medium stores a computer program that is executed by a processor to implement the method for resource determination.

According to an aspect of embodiments of the disclosure, a chip is provided. The chip includes programmable logic circuits and/or program instructions. The chip, when running, is configured to implement the method for resource determination.

According to an aspect of embodiments of the disclosure, a computer program product is provided. The computer program product includes computer instructions stored in a computer-readable storage medium. A processor is configured to read and execute the computer instructions stored in the computer-readable storage medium, to implement the method for resource determination.

The technical solutions provided in the disclosure may have the following beneficial effects. The first information indicates the type of the *M* time-domain units that satisfy the predefined restriction, such that the terminal device can determine at least one first time-domain unit from the *N* first time-domain units based on the type of the *M* time-domain units indicated by the first information, where the at least one first time-domain unit is configured with the first subband. With the predefined restriction, the terminal device and the network device can have a consistent understanding of the *M* time-domain units, thereby avoiding a situation where communication cannot be performed on the *M* time-domain units.

### BRIEF DESCRIPTION OF THE DRAWINGS

FIG. 1 is a schematic diagram illustrating a network architecture provided in an embodiment of the disclosure.
FIG. 2 is a schematic diagram illustrating a DL time-domain unit configured with a UL subband provided in an embodiment of the disclosure.
FIG. 3 is a flowchart of a method for resource determination provided in an embodiment of the disclosure.
FIG. 4 is a schematic diagram illustrating first time-domain symbols within a time-domain period provided in an embodiment of the disclosure.
FIG. 5 is a schematic diagram illustrating first time-domain symbols within a time-domain period provided in another embodiment of the disclosure.
FIG. 6 is a schematic diagram illustrating first time-domain symbols within a time-domain period provided in another embodiment of the disclosure.
FIG. 7 is a schematic diagram illustrating first time-domain symbols within a time-domain period provided in another embodiment of the disclosure.
FIG. 8 is a schematic diagram illustrating first time-domain symbols within a time-domain period provided in another embodiment of the disclosure.
FIG. 9 is a schematic diagram illustrating first time-domain symbols within a time-domain period provided in another embodiment of the disclosure.
FIG. 10 is a schematic diagram illustrating first time-domain symbols within a time-domain period provided in another embodiment of the disclosure.
FIG. 11 is a block diagram of an apparatus for resource determination provided in an embodiment of the disclosure.
FIG. 12 is a block diagram of an apparatus for resource determination provided in another embodiment of the disclosure.
FIG. 13 is a schematic structural diagram of a terminal device provided in an embodiment of the disclosure.
FIG. 14 is a schematic structural diagram of a network device provided in an embodiment of the disclosure.

### DETAILED DESCRIPTION

To make the objectives, technical solutions, and advantages of the disclosure clearer, embodiments of the disclosure will be further described in detail below with reference to accompanying drawings.

A network architecture and service scenarios described in embodiments of the disclosure are intended to describe the technical solutions of embodiments of the disclosure more clearly, and do not constitute any limitation on the technical solutions provided in embodiments of the disclosure. Those of ordinary skill in the art can appreciate that, with the evolution of network architectures and the emergence of new service scenarios, for similar technical issues, the technical solutions provided in embodiments of the disclosure are also applicable.

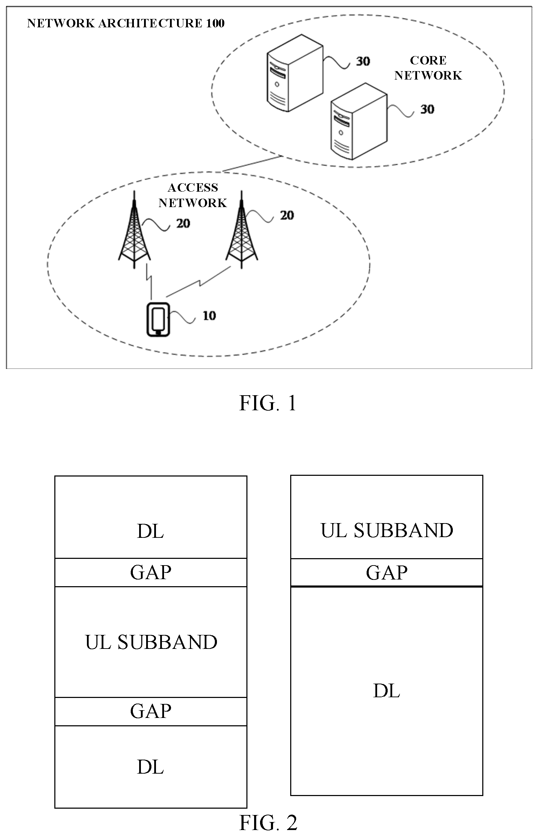

Reference may be made to FIG. 1, which is a schematic diagram illustrating a network architecture 100 provided in an embodiment of the disclosure. The network architecture 100 may include a terminal device 10, an access network (AN) device 20, and a core network (CN) element 30.

The terminal device 10 may refer to a user equipment (UE), a station (STA), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, a terminal device in a 5th generation system (5GS), a terminal device in a future evolved public land mobile network (PLMN), etc., which is not limited in embodiments of the disclosure. For ease of description, the devices mentioned above are collectively referred to as "terminal device. The number of terminal devices 10 is typically multiple, and there may be one or more terminal devices 10 in each cell managed by each AN device 20. The terminal device may also be shortly referred to as a terminal or a UE, the meaning of which can be understood by those skilled in the art.

The AN device 20 is a device deployed in an AN for providing wireless communication functions for the terminal device 10. The AN device 20 may include various forms of macro network devices, micro network devices, relay stations, access points (APs), etc. The name of a device with functions of the AN device may be different in systems adopting different radio access technologies. For example, the device is referred to as a gNodeB or a gNB in a 5G new radio (NR) system. With the evolution of communication technologies, the name "AN device" may be changed. For ease of description, in embodiments of the disclosure, the apparatus for providing wireless communication functions for the terminal device 10 is collectively referred to as "AN device". In some embodiments, a communication relationship may be established between the terminal device 10 and the CN device 30 via the AN device 20. For example, in a long-term evolution (LTE) system, the AN device 20 may be an evolved universal terrestrial radio access network (EUTRAN) or one or more eNodeBs in the EUTRAN. In a 5G NR system, the AN device 20 may be a radio access network (RAN) or one or more gNBs in the RAN. In embodiments of the disclosure, unless otherwise specified, the term "network device" is the AN device 20, such as a network device.

The CN element 30 is a network element deployed in a CN. The main functions of the CN device 30 are to provide a user connection, user management, and service bearing, and to provide an interface to an external network as a bearer network. For example, a CN element in the 5G NR system may include network elements such as an access and mobility management function (AMF) entity, a user plane function (UPF) entity, a session management function (SMF) entity, etc.

In some embodiments, the AN device 20 communicates with the CN device 30 using a specific air interface technology, such as an NG interface in the 5G NR system. The AN device 20 communicates with the terminal device 10 using a specific air interface technology, such as a Uu interface.

The "5G NR system" in embodiments of the disclosure may also be referred to as a 5G system or an NR system, the meaning of which can be understood by those skilled in the art. The technical solutions of embodiments of the disclosure are applicable to the LTE system, the 5G NR system, an evolved system subsequent to the 5G NR system (e.g., a beyond 5G (B5G) system, a 6th generation (6G) system), a narrowband Internet of things (NB-IoT) system, and other communication systems, which are not limited in the disclosure.

In embodiments of the disclosure, the network device can provide services for a cell. The terminal device communicates with the network device over a transmission resource (e.g., a frequency-domain resource or a spectrum resource) on a carrier used by the cell. The cell may be a cell corresponding to the network device (e.g., a network device). The cell may belong to a macro network device or a network device corresponding to a small cell. The small cell herein may include a metro cell, a micro cell, a pico cell, a femto cell, etc. These small cells have the characteristics of small coverage and low transmission power, and are applicable to providing high-rate data transmission services.

Prior to descriptions of the technical solutions of the disclosure, some related technical knowledge involved in the disclosure is described. The following related arts, as optional solutions, may be arbitrarily combined with the technical solutions of embodiments of the disclosure, and all fall within the protection scope of embodiments of the disclosure. Embodiments of the disclosure include at least part of the following content.

### 1. Time-division duplexing (TDD) UL and DL configuration

For a TDD system, the UL and DL configuration is used to configure/indicate a transmission direction of each time-domain symbol, where the transmission direction includes a DL symbol, a flexible symbol, and a UL symbol. Specific configuration signalling includes TDD UL and DL common configuration (*TDD-UL-DL-ConfigCommon*), TDD UL and DL dedicated configuration (*TDD-UL-DL-ConfigDedicated*), and slot format indication (SFI). *TDD-UL-DL-ConfigCommon* and *TDD-UL-DL-ConfigDedicated* are higher-layer signalling, where the former is configured for a cell and is sent to all users in the cell through broadcast information, and the latter is independently sent to users who need it through radio resource control (RRC) signalling. In *tdd-UL-DL-ConfigurationCommon*, one pattern (pattern 1) or two patterns (pattern 1 and pattern 2) may be configured. Within a period of each pattern, a network can configure a slot structure in the pattern. A terminal device can determine a slot structure in one pattern (pattern 1) according to *tdd-UL-DL-ConfigurationCommon* and repeat the slot structure with a period *P* in a time domain. When two patterns, i.e., pattern 1 (corresponding to period *P*) and pattern 2 (corresponding to period *P*2), are configured in *tdd-UL-DL-ConfigurationCommon*, pattern 1 and pattern 2 appear alternately in the time domain, and *P*+*P*2 shall be divisible by 20 ms. *TDD-UL-DL-ConfigDedicated* can indicate a flexible slot/symbol configured by *TDD-UL-DL-ConfigCommon* as a UL symbol, a DL symbol, or a flexible symbol.

SFI indicates a transmission direction of each slot/symbol in each carrier through downlink control information (DCI) (also referred to as group common DCI) of a user group: DCI format 2_0. Since SFI is dynamic signalling, SFI can indicate a semi-statically configured flexible slot/symbol (which is indicated by *TDD-UL-DL-ConfigCommon* if only *TDD-UL-DL-ConfigCommon* is received, or which is indicated by both *TDD-UL-DL-ConfigCommon* and *TDD-UL-DL-ConfigDedicated* if both *TDD-UL-DL-ConfigCommon* and *TDD-UL-DL-ConfigDedicated* are received) as a determined transmission direction, i.e., UL or DL.

### 2. Subband non-overlapping full duplex (SBFD)

To overcome issues such as weak UL coverage, high UL latency, and insufficient UL capacity caused by limited UL resource allocation in NR TDD, cross-division duplex (XDD) technology has been introduced in the related art, i.e., simultaneous data transmission and reception can be performed on different subbands in the same subframe/slot/symbol. The XDD technology is mainly used at a network device side, and a terminal device side only supports data transmission or reception in one subframe/slot/symbol. As illustrated in FIG. 2, a middle subband of a DL or flexible subframe/slot/symbol is configured as a UL subband.

The following conclusions are disclosed in the related art:
- SBFD operates within a TDD carrier.
- SBFD scheme is designed within a single configured DL and UL bandwidth part (BWP) pair with aligned center frequencies; and
- Up to one UL subband in an SBFD symbol in a TDD carrier (the UL subband may be positioned in the middle or on both sides of the TDD carrier).
- SBFD operation within a TDD carrier
- SBFD scheme within a single configured DL and UL BWP pair with aligned center frequencies, and
- Up to one UL subband for SBFD operation in an SBFD symbol (excluding legacy UL symbol) within a TDD carrier.

For semi-static SBFD, in order to avoid frequent switching between an SBFD symbol and a non-SBFD symbol, up to two transition points, i.e., one transition point from non-SBFD symbols to SBFD symbols and one transition point from SBFD symbols to non-SBFD symbols, are supported within a TDD UL/DL pattern period.

At least for semi-static SBFD, in order to avoid frequent switching between SBFD and non-SBFD symbols, potential limitation on the maximum number of transition points between SBFD and non-SBFD symbols can be considered from SBFD subband configuration perspective. Maximum of two transition points including one transition point from non-SBFD symbols to SBFD symbols and one transition point from SBFD symbols to non-SBFD symbols within a TDD UL/DL pattern period can be considered as a starting point where the transition point can be aligned with slot boundary or within a slot.
- (Agreement) The usage of 'transition point' in previous conclusions/agreements is revised to 'transition point'.

A guard period between SBFD and non-SBFD symbols may or may not be required at a gNB and/or UE side depending on gNB/UE implementation and/or SBFD operation.

In addition, the related art also specifies that if an SBFD subband is used for UL transmission, then the SBFD subband can only be configured in a DL symbol or a flexible symbol indicated by *TDD-UL-DL-ConfigCommon*, UL transmission can only be allowed within a UL subband(s), and DL reception can only be allowed within a DL subband(s):
- Transmission and reception behaviours on SBFD subbands configured in DL and/or flexible symbol indicated by *TDD-UL-DL-ConfigCommon*
- UL transmissions within UL subband only
- DL receptions within DL subband(s) only, except for cross-link interference (CLI) measurement by the UE outside of the DL subbands

According to the foregoing specification that the SBFD subband used for UL transmission can only be configured in the DL symbol or the flexible symbol indicated by *TDD-UL-DL-ConfigCommon*, for the flexible symbol configured by *TDD-UL-DL-ConfigCommon*, the terminal device further receives *TDD-UL-DL-ConfigDedicated* and/or DCI format 2_0, so as to indicate the flexible symbol as a DL symbol or an UL symbol. In particular, when the flexible symbol is indicated as a UL symbol, there can be two understandings of a bandwidth for UL transmission during the symbol:
- UL transmission can still only be allowed within a UL subband; and
- UL transmission can be allowed within the entire bandwidth (of a BWP) corresponding to the symbol.

If the terminal device and the network device have an inconsistent understanding of the bandwidth for UL transmission during the symbol, normal communication cannot be performed in the symbol.

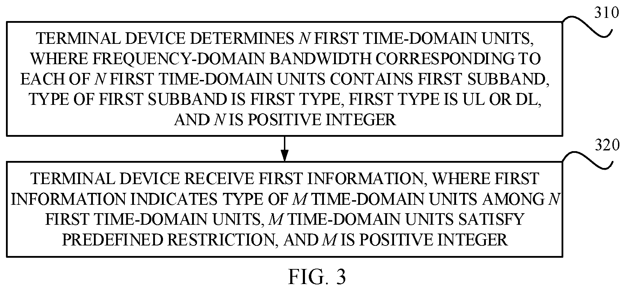

Reference may be made to FIG. 3, which illustrates a flowchart of a method for resource determination provided in an embodiment of the disclosure. The method is performed by a terminal device and may include at least one of the following operations at S310 to S320.

At S310, the terminal device determines *N* first time-domain units, where a first frequency-domain resource corresponding to each of the *N* first time-domain units contains a first subband, a type of the first subband is a first type, the first type is UL or DL, and *N* is a positive integer.

In some embodiments, the first frequency-domain resource is a carrier bandwidth, a cell bandwidth, or a BWP.

In some embodiments, a time-domain unit may be defined with a granularity of a slot, a subframe, or a symbol. Exemplarily, one slot is one time-domain unit, or one subframe is one time-domain unit, or one symbol is one time-domain unit. In some embodiments, a time-domain unit may be defined with a granularity of a slot group, a subframe group, or a symbol group. Exemplarily, one slot group is one time-domain unit, and one slot group contains at least one slot. Exemplarily, one subframe group is one time-domain unit, and one subframe group contains at least one subframe. Exemplarily, one symbol group is one time-domain unit, and one symbol group contains at least one symbol. The name of the time-domain unit may differ in different communication systems, which is not limited in the disclosure.

In some embodiments, the first subband is a part of the first frequency-domain resource, i.e., the bandwidth of the first subband is less than or equal to the bandwidth of the first frequency-domain resource. The first subband may be positioned in the middle of a frequency-domain bandwidth corresponding to a first time-domain unit, or may be positioned on both sides of the frequency-domain bandwidth corresponding to the first time-domain unit, which is not limited in the disclosure. Exemplarily, as illustrated in FIG. 2, the type of the first subband is UL, a type of the first time-domain unit is DL, and the first subband may be positioned in the middle of the frequency-domain bandwidth corresponding to the first time-domain unit, or may be positioned on both sides of the frequency-domain bandwidth corresponding to the first time-domain unit.

In some embodiments, the first time-domain unit may be referred to as an SBFD time-domain unit. Exemplarily, the first time-domain unit may be an SBFD symbol, an SBFD slot, or an SBFD subframe. In some embodiments, the first time-domain unit may be referred to as a hybrid time-domain unit, i.e., the first time-domain unit is configured with at least two of an UL frequency-domain resource, a DL frequency-domain resource, a flexible frequency-domain resource, or a gap frequency-domain resource.

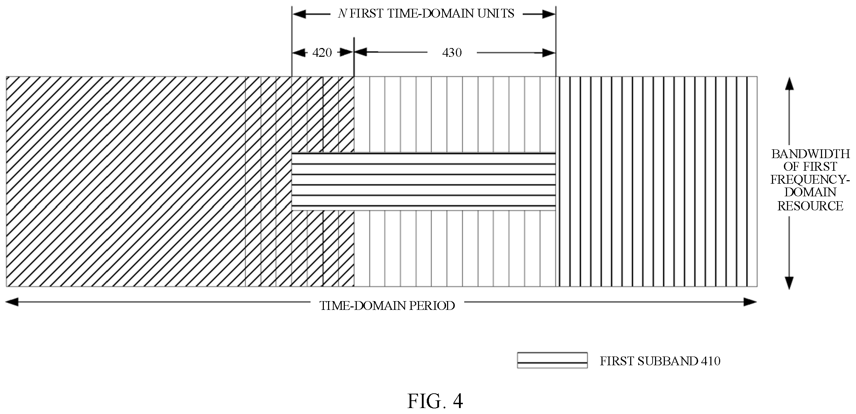

In some embodiments, the frequency-domain bandwidth corresponding to the first time-domain unit further contains a second subband. In some embodiments, a type of the second subband is a second type, and the first type is different from the second type. In some embodiments, the second type is UL, DL, or gap. Exemplarily, the first type is UL, and the second type is DL. Exemplarily, the first type is DL, and the second type is UL. Exemplarily, as illustrated in FIG. 4, if the first type is UL or a first subband 410 is used for UL transmission, then a type of time-domain units 420 is DL, or the time-domain units 420 are used for DL transmission, or the time-domain units 420 are DL time-domain units. Exemplarily, as illustrated in FIG. 4, if the first type is DL or the first subband 410 is used for DL transmission, then the type of the time-domain units 420 is UL, or the time-domain units 420 are used for UL transmission, or the time-domain units 420 are UL time-domain units.

In some embodiments, the second subband is not configured for UL transmission or DL transmission. Exemplarily, the first type is UL, and the second subband is not configured for UL transmission or DL transmission. Exemplarily, the first type is DL, and the second subband is not configured for UL transmission or DL transmission. Exemplarily, as illustrated in FIG. 4, if the first type is UL or the first subband 410 is used for UL transmission, then time-domain units 430 are flexible time-domain units. Exemplarily, as illustrated in FIG. 4, if the first type is DL or the first subband 410 is used for DL transmission, then the time-domain units 430 are flexible time-domain units.

At S320, the terminal device receives first information, where the first information indicates a type of *M* time-domain units among the *N* first time-domain units, the *M* time-domain units satisfy a predefined restriction, and *M* is a positive integer.

Correspondingly, a network device sends the first information to the terminal device.

In some embodiments, the first information indicates that the type of the *M* time-domain units among the *N* first time-domain units is one of UL, DL, or flexible.

In some embodiments, the *N* first time-domain units include a first-kind first time-domain unit and a second-kind first time-domain unit. For the first-kind first time-domain unit, a type of a second subband is different from a type of a first subband. Exemplarily, a type of the first-kind first time-domain unit is indicated as DL or UL in *TDD-UL-DL-ConfigCommon* information. A second subband corresponding to the second-kind first time-domain unit is not configured for UL transmission or DL transmission. Exemplarily, a type of the second-kind first time-domain unit is indicated as flexible in the *TDD-UL-DL-ConfigCommon* information. In some embodiments, the *M* time-domain units are *M* second-kind first time-domain units. Exemplarily, the type of the *M* time-domain units is indicated as flexible in the *TDD-UL-DL-ConfigCommon* information.

In some embodiments, the first information may be *TDD-UL-DL-ConfigDedicated* information, SFI, or DCI format 2_0.

In some embodiments, the *M* time-domain units satisfying the predefined restriction includes one of the following. The type of the *M* time-domain units is the first type, the type of the *M* time-domain units is another type other than the first type, or the type of the *M* time-domain units is not effective.

In some embodiments, the first time-domain unit is configured with the first subband and the second subband, and the type of the second subband is different from the type of the first subband. In some embodiments, if the first subband is used for UL transmission, then the *M* time-domain units are DL time-domain units or flexible time-domain units; and if the first subband is used for DL transmission, then the *M* time-domain units are UL time-domain units or flexible time-domain units. Therefore, the terminal device can determine the first time-domain unit according to the type of the *M* time-domain units indicated by the first information and the above conditions. Exemplarily, if the type of the *M* time-domain units is the first type, then the *M* time-domain units are no longer considered first time-domain units, and the first time-domain units will be updated to be first time-domain units other than the *M* time-domain units among the *N* first time-domain units. Exemplarily, if the type of the *M* time-domain units is another type other than the first type, then the *M* time-domain units still satisfy the above conditions, and thus the *M* time-domain units are still first time-domain units.

In some embodiments, the terminal device may perform the operations at S310 before the operations at S320, or may perform the operations at S310 after the operations at S320, which is not limited in the disclosure.

In the technical solutions provided in embodiments of the disclosure, the first information indicates the type of the *M* time-domain units that satisfy the predefined restriction, such that the terminal device can determine at least one first time-domain unit from the *N* first time-domain units based on the type of the *M* time-domain units indicated by the first information, where the at least one first time-domain unit is configured with the first subband. With the predefined restriction, the terminal device and the network device can have a consistent understanding of the *M* time-domain units, thereby avoiding a situation where communication cannot be performed on the *M* time-domain units.

For several cases where the *M* time-domain units satisfy the predefined restriction, illustrative embodiments are provided in the disclosure.

Case 1, the type of the *M* time-domain units is the first type

In some embodiments, if the first subband is used for UL transmission, then the *M* time-domain units are UL time-domain units. In some embodiments, if the first subband is used for DL transmission, then the *M* time-domain units are DL time-domain units.

In some embodiments, if the type of the *M* time-domain units is the first type, then the terminal device removes the *M* time-domain units from the *N* first time-domain units, the remaining (*N*-*M*) time-domain units serve as first time-domain units, and the *M* time-domain units are no longer considered first time-domain units.

In some embodiments, within the first time-domain units other than the *M* time-domain units, frequency-domain resources occupied by transmission with the first type do not exceed the first subband. In some embodiments, within the first time-domain units other than the *M* time-domain units, a frequency-domain resource range occupied by transmission with the first type is less than or equal to the first subband. In some embodiments, within the first time-domain units other than the *M* time-domain units, the frequency-domain resources occupied by transmission with the first type are positioned within the first subband. In some embodiments, within the *M* time-domain units, frequency-domain resources occupied by transmission with the first type do not exceed the first frequency-domain resource. In some embodiments, within the *M* time-domain units, a frequency-domain resource range occupied by transmission with the first type is equal to the first frequency-domain resource. In some embodiments, within the *M* time-domain units, the frequency-domain resources occupied by transmission with the first type are positioned within the first frequency-domain resource.

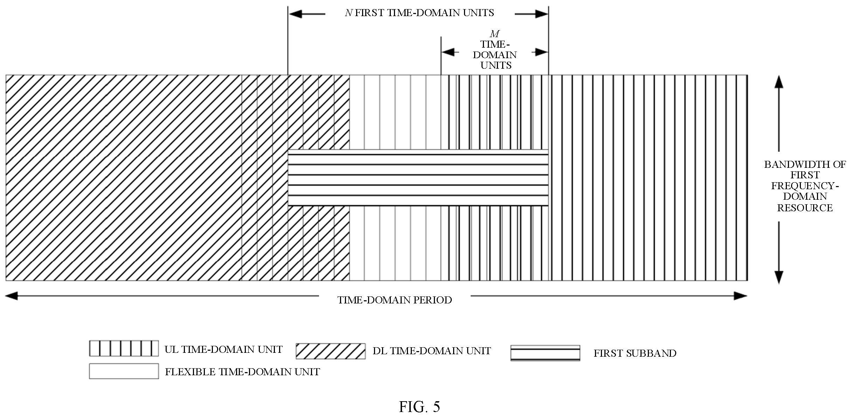

Exemplarily, as illustrated in FIG. 5, the first information indicates the type of the *M* time-domain units. If the first subband is used for UL transmission, and the first information indicates that the type of the *M* time-domain units is UL, then within the *M* time-domain units, frequency-domain resources occupied by UL transmission do not exceed the first frequency-domain resource, and within the first time-domain units other than the *M* time-domain units, frequency-domain resources occupied by UL transmission do not exceed the first subband.

In some embodiments, *L* groups of consecutive first time-domain units are obtained after the *M* time-domain units are removed from the *N* first time-domain units, where *L* is less than or equal to a first value.

In some embodiments, the first value may be predefined or preconfigured, or may be determined based on capability of the terminal device, which is not limited in the disclosure. A specific value of the first value is not limited in the disclosure. Exemplarily, the first value may be 1 or 2.

In some embodiments, after the *M* time-domain units are considered non-first time-domain units and the *N* first time-domain units excluding the *M* time-domain units are considered first time-domain units, within at least one time-domain period, the number of transition points is less than or equal to a second value. A transition point refers to a position where a first time-domain unit transitions to a non-first time-domain unit, or a position where a non-first time-domain unit transitions to a first time-domain unit. In some embodiments, the second value may be predefined or preconfigured, or may be determined based on the capability of the terminal device, which is not limited in the disclosure. A specific value of the second value is not limited in the disclosure. Exemplarily, the second value may be 2 or 4. In some embodiments, the second value is twice the first value.

In some embodiments, the *M* time-domain units may be *M* consecutive time-domain units, or any *M* time-domain units among the *N* first time-domain units. Examples of several possible distributions of the *M* time-domain units among the *N* first time-domain units are provided in embodiments of the disclosure below.
1. The *M* time-domain units are the last *M* first time-domain units among the *N* first time-domain units.

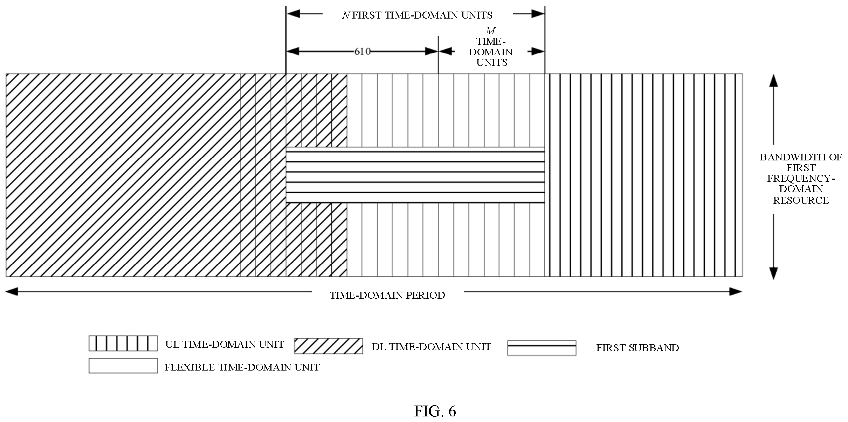

In some embodiments, if the *M* time-domain units are the last *M* first time-domain units among the *N* first time-domain units, then one group of consecutive first time-domain units is obtained after the *M* time-domain units are removed from the *N* first time-domain units. Within this time-domain period, the number of transition points is 2. Exemplarily, as illustrated in FIG. 6, the first subband is used for UL transmission, the *M* time-domain units are the last *M* first time-domain units among the *N* first time-domain units, and then one group of consecutive first time-domain units 610 is obtained after the *M* time-domain units are removed from the *N* first time-domain units. As illustrated in FIG. 6, starting from the leftmost time-domain unit, the transition points include a position (the left boundary of the consecutive first time-domain units 610) where a DL time-domain unit transitions to a first time-domain unit, and a position (the right boundary of the consecutive first time-domain units 610) where a first time-domain unit transitions to the *M* time-domain units.

In some embodiments, the *M* time-domain units are *M* second-kind first time-domain units. If the second-kind first time-domain unit is positioned after the first-kind first time-domain unit, and the *M* time-domain units are the last *M* second-kind first time-domain units among the *N* first time-domain units, then one group of consecutive first time-domain units is obtained after the *M* time-domain units are removed from the *N* first time-domain units. Within this time-domain period, the number of transition points is 2. Exemplarily, as illustrated in FIG. 6, the first subband is used for UL transmission, the *M* time-domain units are the last *M* flexible time-domain units among the *N* first time-domain units, and then one group of consecutive first time-domain units 610 is obtained after the *M* time-domain units are removed from the *N* first time-domain units. As illustrated in FIG. 6, starting from the leftmost time-domain unit, the transition points include a position (the left boundary of the consecutive first time-domain units 610) where a DL time-domain unit transitions to a first time-domain unit, and a position (the right boundary of the consecutive first time-domain units 610) where a first time-domain unit transitions to the *M* time-domain units.

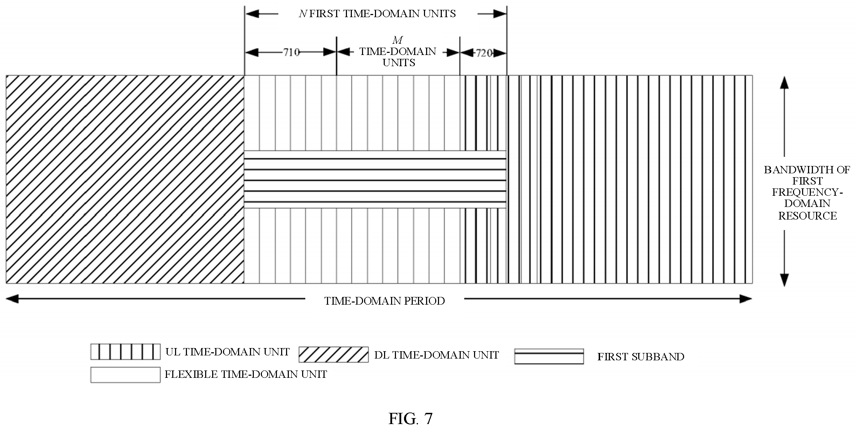

In some embodiments, the *M* time-domain units are *M* second-kind first time-domain units. If the second-kind first time-domain unit is positioned before the first-kind first time-domain unit, and the *M* time-domain units are the last *M* second-kind first time-domain units among the *N* first time-domain units, then two groups of consecutive first time-domain units are obtained after the *M* time-domain units are removed from the *N* first time-domain units. Within this time-domain period, the number of transition points is 4. Exemplarily, as illustrated in FIG. 7, the first subband is used for DL transmission, the *M* time-domain units are the last *M* second-kind first time-domain units among the *N* first time-domain units, and then one group of consecutive first time-domain units 710 and one group of consecutive first time-domain units 720 are obtained after the *M* time-domain units are removed from the *N* first time-domain units. As illustrated in FIG. 7, starting from the leftmost time-domain unit, the transition points include a position (the left boundary of the consecutive first time-domain units 710) where a DL time-domain unit transitions to a first time-domain unit, a position (the right boundary of the consecutive first time-domain units 710) where a first time-domain unit transitions to the *M* time-domain units, a position (the left boundary of the consecutive first time-domain units 720) where the *M* time-domain units transition to a first time-domain unit, and a position (the right boundary of the consecutive first time-domain units 720) where a first time-domain unit transitions to a UL time-domain unit.

### 2. The M time-domain units are the first M first time-domain units among the N first time-domain units

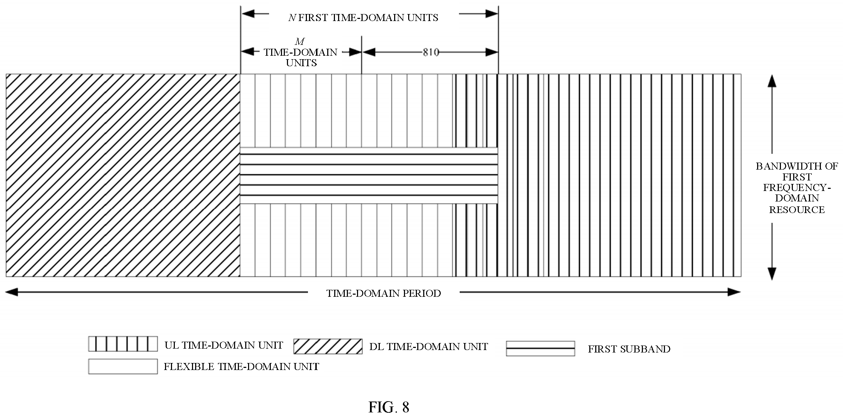

In some embodiments, if the *M* time-domain units are the first *M* first time-domain units among the *N* first time-domain units, then one group of consecutive first time-domain units is obtained after the *M* time-domain units are removed from the *N* first time-domain units. Within this time-domain period, the number of transition points is 2. Exemplarily, as illustrated in FIG. 8, the first subband is used for DL transmission, the *M* time-domain units are the first *M* first time-domain units among the *N* first time-domain units, and then one group of consecutive first time-domain units 810 is obtained after the *M* time-domain units are removed from the *N* first time-domain units. As illustrated in FIG. 8, starting from the leftmost time-domain unit, the transition points include a position (the left boundary of the consecutive first time-domain units 810) where the *M* time-domain units transition to a first time-domain unit, and a position (the right boundary of the consecutive first time-domain units 810) where a first time-domain unit transitions to a UL time-domain unit.

In some embodiments, the *M* time-domain units are *M* second-kind first time-domain units. If the second-kind first time-domain unit is positioned before the first-kind first time-domain unit, and the *M* time-domain units are the first *M* second-kind first time-domain units among the *N* first time-domain units, then one group of consecutive first time-domain units is obtained after the *M* time-domain units are removed from the N first time-domain units. Within this time-domain period, the number of transition points is 2. Exemplarily, as illustrated in FIG. 8, the first subband is used for DL transmission, the *M* time-domain units are the first *M* flexible time-domain units among the *N* first time-domain units, and then one group of consecutive first time-domain units 810 is obtained after the *M* time-domain units are removed from the N first time-domain units. As illustrated in FIG. 8, starting from the leftmost time-domain unit, the transition points include a position (the left boundary of the consecutive first time-domain units 810) where the *M* time-domain units transition to a first time-domain unit, and a position (the right boundary of the consecutive first time-domain units 810) where a first time-domain unit transitions to a UL time-domain unit.

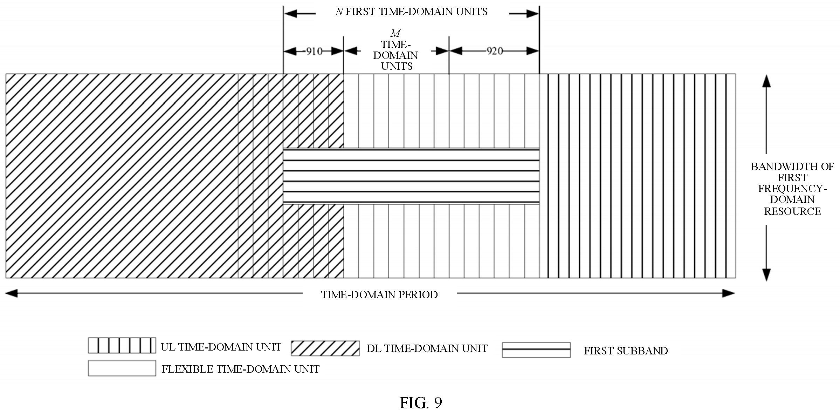

In some embodiments, the *M* time-domain units are *M* second-kind first time-domain units. If the second-kind first time-domain unit is positioned before the first-kind first time-domain unit, and the *M* time-domain units are the first *M* second-kind first time-domain units among the *N* first time-domain units, then two groups of consecutive first time-domain units are obtained after the *M* time-domain units are removed from the *N* first time-domain units. Within this time-domain period, the number of transition points is 4. Exemplarily, as illustrated in FIG. 9, the first subband is used for UL transmission, the *M* time-domain units are the first *M* second-kind first time-domain units among the *N* first time-domain units, and then one group of consecutive first time-domain units 910 and one group of consecutive first time-domain units 920 are obtained after the *M* time-domain units are removed from the *N* first time-domain units. As illustrated in FIG. 9, starting from the leftmost time-domain unit, the transition points include a position (the left boundary of the consecutive first time-domain units 910) where a DL time-domain unit transitions to a first time-domain unit, a position (the right boundary of the consecutive first time-domain units 910) where a first time-domain unit transitions to the *M* time-domain units, a position (the left boundary of the consecutive first time-domain units 920) where the *M* time-domain units transition to a first time-domain unit, and a position (the right boundary of the consecutive first time-domain units 920) where a first time-domain unit transitions to a UL time-domain unit.

### 3. The M time-domain units are any M first time-domain units among the N first time-domain units

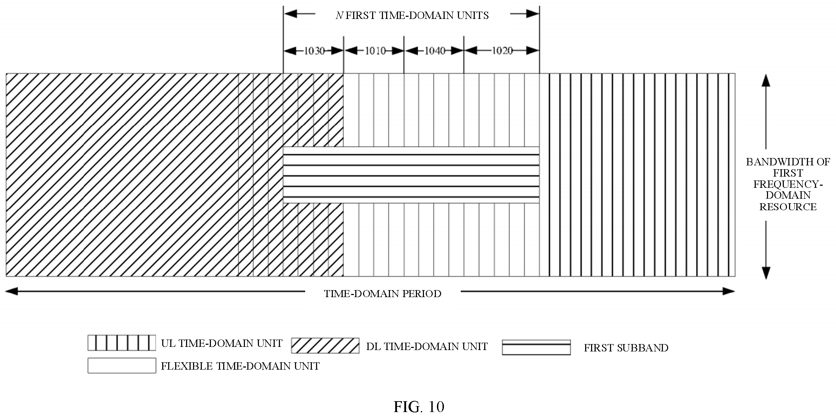

In some embodiments, the *M* time-domain units are any *M* first time-domain units among the *N* first time-domain units. The *M* time-domain units may be one group of *M* consecutive time-domain units. Alternatively, the *M* time-domain units may be multiple groups of time-domain units totaling *M*, where time-domain units in each group are consecutive, and any two groups of time-domain units are not consecutive. For the case of one group of *M* consecutive time-domain units, reference can be made to the examples corresponding to FIG. 6 to FIG. 9 mentioned above, which are not repeated in the disclosure. For the case of multiple groups of time-domain units totaling *M*, as illustrated in FIG. 10, the first information indicates a type of time-domain units in a time-domain unit group 1030 and a type of time-domain units in a time-domain unit group 1040. The first subband is used for UL transmission, and one group of consecutive first time-domain units 1010 and one group of consecutive first time-domain units 1020 are obtained after the *M* time-domain units are removed from the *N* first time-domain units. Within this time-domain period, the number of transition points is 4. As illustrated in FIG. 10, starting from the leftmost time-domain unit, the transition points include a position (the left boundary of the consecutive first time-domain units 1010) where the *M* time-domain units transition to a first time-domain unit, a position (the right boundary of the consecutive first time-domain units 1010) where a first time-domain unit transitions to the *M* time-domain units, a position (the left boundary of the consecutive first time-domain units 1020) where the *M* time-domain units transition to a first time-domain unit, and a position (the right boundary of the consecutive first time-domain units 1020) where a first time-domain unit transitions to a UL time-domain unit. In some embodiments, the *M* time-domain units are any *M* second-kind first time-domain units among the *N* first time-domain units. As illustrated in FIG. 10, the first information indicates a type of time-domain units in a time-domain unit group 1010 and a type of time-domain units in a time-domain unit group 1020. The first subband is used for UL transmission, and one group of consecutive first time-domain units 1030 and one group of consecutive first time-domain units 1040 are obtained after the *M* time-domain units are removed from the *N* first time-domain units. Within this time-domain period, the number of transition points is 4. As illustrated in FIG. 10, starting from the leftmost time-domain unit, the transition points include a position (the left boundary of the consecutive first time-domain units 1030) where a DL time-domain unit transitions to a first time-domain unit, a position (the right boundary of the consecutive first time-domain units 1030) where a first time-domain unit transitions to the *M* time-domain units, a position (the left boundary of the consecutive first time-domain units 1040) where the *M* time-domain units transition to a first time-domain unit, and a position (the right boundary of the consecutive first time-domain units 1040) where a first time-domain unit transitions to the *M* time-domain units.

Since a transition point may introduce a certain time-domain gap or transmission interruption time, with the above method, the number of transition points within a time-domain period can be controlled. If the number of transition points within a time-domain period is controlled to be 2, then the terminal device can be implemented relatively simply, system efficiency is high, but flexibility is limited. If the number of transition points is controlled to be greater than 2, certain flexibility can be achieved. Therefore, the number of transition points (i.e., the first value and/or the second value) can be determined according to the capability of the terminal device.

### Case 2, the type of the M time-domain units is another type other than the first type

In some embodiments, if the type of the *M* time-domain units is another type other than the first type, then the *M* time-domain units can still serve as first time-domain units. In some embodiments, within the *N* first time-domain units, frequency-domain resources occupied by transmission with the first type do not exceed the first subband. In some embodiments, within the *N* first time-domain units, a frequency-domain resource range occupied by transmission with the first type is less than or equal to the first subband. In some embodiments, within the *N* first time-domain units, the frequency-domain resources occupied by transmission with the first type are positioned within the first subband.

In some embodiments, if the first subband is used for UL transmission, then the *M* time-domain units are DL time-domain units or flexible time-domain units.

In some embodiments, if the first subband is used for DL transmission, then the *M* time-domain units are UL time-domain units or flexible time-domain units.

In some embodiments, if the first subband is used for UL transmission, then the terminal device does not expect the *M* time-domain units to be UL time-domain units.

In some embodiments, if the first subband is used for DL transmission, then the terminal device does not expect the *M* time-domain units to be DL time-domain units.

Exemplarily, as illustrated in FIG. 6, if the first subband is used for UL transmission, then the *M* time-domain units are configured by the first information as DL time-domain units or flexible time-domain units; and if the first subband is used for DL transmission, then the *M* time-domain units are configured by the first information as UL time-domain units or flexible time-domain units.

Through the above method, a configuration restriction is introduced at the network device side, which makes the implementation of the terminal device simplest, but offers less flexibility compared to Case 1.

### Case 3, the indication information for the type of the M time-domain units is not effective

In some embodiments, the terminal device does not use the indication information for the type of the *M* time-domain units in the first information, or the terminal device does not read the indication information for the type of the *M* time-domain units in the first information, or the terminal device ignores the indication information for the type of the *M* time-domain units in the first information, or the terminal device skips the indication information for the type of the *M* time-domain units in the first information, or the indication information for the type of the *M* time-domain units in the first information is reserved.

Through the above method, the terminal device makes a simple determination on the first information, which makes the implementation of the terminal device relatively simple, but offers less flexibility compared to Case 1.

Regarding how the terminal device determines the *N* first time-domain units, illustrative embodiments are provided in the disclosure.

In some embodiments, the method further includes at least one of the following operations at S330 to S340.

At S330, the terminal device determines the *N* first time-domain units.

In some embodiments, the terminal device may determine the *N* first time-domain units according to a predefined rule, or the terminal device may determine the *N* first time-domain units according to second information. Correspondingly, the network device sends the second information to the terminal device.

At S340, the terminal device determines a type of each of the *N* first time-domain units.

In some embodiments, the terminal device may determine the *N* first time-domain units according to the predefined rule, or the terminal device may determine the type of each of the *N* first time-domain units according to third information. In some embodiments, the terminal device determines a type of each of multiple time-domain units according to the third information, where the multiple time-domain units include the *N* first time-domain units. Correspondingly, the network device sends the third information to the terminal device.

In some embodiments, the *N* first time-domain units or the multiple time-domain units have a time-domain period or a pattern period. In some embodiments, a duration of one time-domain period can be divisible by 20ms. Exemplarily, the duration of one time-domain period may be 4ms, or the duration of one time-domain period may be 5ms.

In some embodiments, a type of a time-domain unit is one of UL, DL, or flexible. In some embodiments, if the type of the time-domain unit is UL, then the time-domain unit can be referred to as a UL time-domain unit, or the time-domain unit is used for UL transmission. Exemplarily, if a type of a symbol is UL, then the symbol can be referred to as an UL symbol, or the symbol is used for UL transmission. In some embodiments, if the type of the time-domain unit is DL, then the time-domain unit can be referred to as a DL time-domain unit, or the time-domain unit is used for DL transmission. Exemplarily, if the type of the symbol is DL, then the symbol can be referred to as a DL symbol, or the symbol is used for DL transmission. In some embodiments, if the type of the time-domain unit is flexible, then the time-domain unit can be referred to as a flexible time-domain unit, or the time-domain unit is used for flexible transmission. Exemplarily, if the type of the symbol is flexible, then the symbol can be referred to as a flexible symbol, or the symbol is used for flexible transmission.

In some embodiments, the third information may be *TDD-UL-DL-ConfigCommon* information.

In some embodiments, the second information and the third information may be sent simultaneously or separately, which is not limited in the disclosure. Exemplarily, the second information and the third information are separate pieces of information and sent simultaneously. Exemplarily, the second information is carried in the third information. Exemplarily, the third information is carried in the second information. Exemplarily, the second information and the third information are separate pieces of information and sent separately. In some embodiments, the third information is sent before the first information. In some embodiments, an order of sending the second information and the third information is not limited in the disclosure. In some embodiments, an order of sending the first information and the second information is not limited in the disclosure.

In some embodiments, the terminal device determines, based on the third information, at least one UL time-domain unit, at least one DL time-domain unit, and at least one flexible time-domain unit within a time-domain period. The terminal device determines the *N* first time-domain units based on the second information.

In some embodiments, the *N* first time-domain units include at least one second-kind first time-domain unit.

In some embodiments, the second information may be sent simultaneously with the third information. Exemplarily, the second information may be sent simultaneously with *TDD-UL-DL-ConfigCommon*. For example, *TDD-UL-DL-ConfigCommon* contains the second information.

In some embodiments, the second information and the third information may be sent as separate pieces of information. Exemplarily, the second information and *TDD-UL-DL-ConfigCommon* are sent as separate pieces of information.

In some embodiments, if the first subband is used for UL transmission, then the second information only indicates a DL time-domain unit and/or a flexible time-domain unit. If the first subband is used for DL transmission, then the second information only indicates a UL time-domain unit and/or a flexible time-domain unit.

In some embodiments, the second information indicates a UL time-domain unit, a DL time-domain unit, and a flexible time-domain unit. The terminal device determines the *N* first time-domain units based on the type of the first subband and the second information. Exemplarily, if the first subband is used for UL transmission, then the terminal device determines the DL time-domain unit and/or the flexible time-domain unit indicated by the second information as the first time-domain unit; and if the first subband is used for DL transmission, then the terminal device determines the UL time-domain unit and/or the flexible time-domain unit indicated by the second information as the first time-domain unit.

Through the above method, the terminal device can determine the *N* first time-domain units.

In the foregoing method embodiments, the technical solutions of the disclosure are described only from the perspective of interaction between the terminal device and the network device. The operations performed by the terminal device can be implemented separately as the method for resource determination at the terminal device side, and the operations performed by the network device can be implemented separately as the method for resource determination at the network device side. Additionally, embodiments of the disclosure can be arbitrarily combined to form new embodiments, all of which fall within the protection scope of the disclosure.

The following are apparatus embodiments of the disclosure that can be used to perform the method embodiments of the disclosure. For details not disclosed in the apparatus embodiments of the disclosure, reference may be made to the method embodiments of the disclosure.

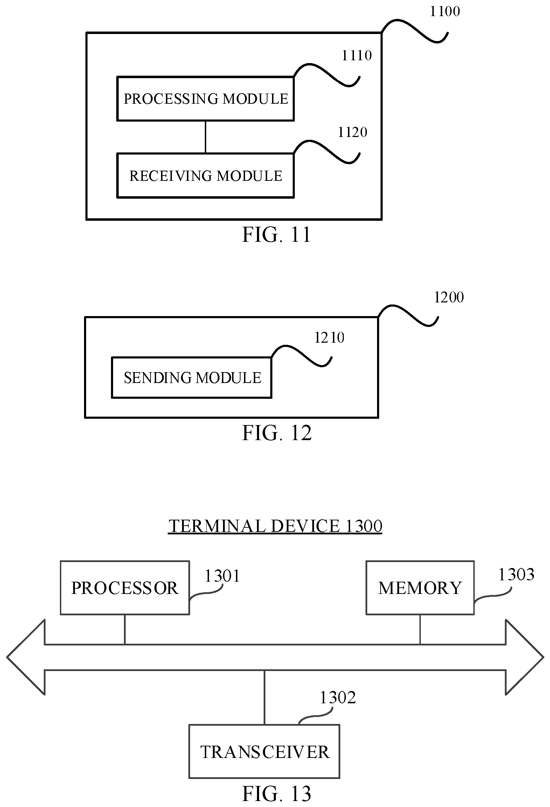

Reference may be made to FIG. 11, which illustrates a block diagram of an apparatus for resource determination provided in an embodiment of the disclosure. The apparatus has a function(s) for implementing the examples of the method for resource determination. The function(s)may be implemented by means of hardware or by executing corresponding software by means of hardware. The apparatus may be the terminal device introduced above, or may be disposed in the terminal device. As illustrated in FIG. 11, the apparatus 1100 may include a processing module 1110 and a receiving module 1120. The processing module 1110 is configured to determine *N* first time-domain units, where a first frequency-domain resource corresponding to each of the *N* first time-domain units contains a first subband, a type of the first subband is a first type, the first type is UL or DL, and *N* is a positive integer. The receiving module 1120 is configured to receive first information, where the first information indicates a type of *M* time-domain units among the *N* first time-domain units, the *M* time-domain units satisfy a predefined restriction, and *M* is a positive integer.

In some embodiments, the *M* time-domain units satisfy the predefined restriction as follows. The type of the *M* time-domain units is the first type.

In some embodiments, the *M* time-domain units are the last *M* first time-domain units among the *N* first time-domain units. Alternatively, the *M* time-domain units are the first *M* first time-domain units among the *N* first time-domain units. Alternatively, *L* groups of consecutive first time-domain units are obtained after the *M* time-domain units are removed from the *N* first time-domain units, where *L* is less than or equal to a first value.

In some embodiments, when the first subband is used for UL transmission, the *M* time-domain units are UL time-domain units. Alternatively, when the first subband is used for DL transmission, the *M* time-domain units are DL time-domain units.

In some embodiments, within first time-domain units other than the *M* time-domain units, frequency-domain resources occupied by transmission with the first type do not exceed the first subband. Alternatively, within the *M* time-domain units, frequency-domain resources occupied by transmission with the first type do not exceed the first frequency-domain resource.

In some embodiments, the *M* time-domain units satisfy the predefined restriction as follows. The type of the *M* time-domain units is another type other than the first type.

In some embodiments, when the first subband is used for UL transmission, the *M* time-domain units are DL time-domain units or flexible time-domain units. Alternatively, when the first subband is used for DL transmission, the *M* time-domain units are UL time-domain units or flexible time-domain units. Alternatively, when the first subband is used for UL transmission, the terminal device does not expect the *M* time-domain units to be UL time-domain units. Alternatively, when the first subband is used for DL transmission, the terminal device does not expect the *M* time-domain units to be DL time-domain units.

In some embodiments, indication information for the type of the *M* time-domain units is not effective.

In some embodiments, within the *N* first time-domain units, frequency-domain resources occupied by transmission with the first type do not exceed the first subband.

In some embodiments, the first frequency-domain resource corresponding to each of the *N* first time-domain units further contains a second subband, and a type of the second subband is a second type; and the first type is different from the second type, or the second subband is not configured for UL transmission or DL transmission.

In the technical solutions provided in embodiments of the disclosure, the first information indicates the type of the *M* time-domain units that satisfy the predefined restriction, such that the terminal device can determine at least one first time-domain unit from the *N* first time-domain units based on the type of the *M* time-domain units indicated by the first information, where the at least one first time-domain unit is configured with the first subband. With the predefined restriction, the terminal device and the network device can have a consistent understanding of the *M* time-domain units, thereby avoiding a situation where communication cannot be performed on the *M* time-domain units.

Reference may be made to FIG. 12, which illustrates a block diagram of an apparatus for resource determination provided in an embodiment of the disclosure. The apparatus has a function(s) for implementing the examples of the method for resource determination. The function(s)may be implemented by means of hardware or by executing corresponding software by means of hardware. The apparatus may be the network device introduced above, or may be provided in the network device. As illustrated in FIG. 12, the apparatus 1200 may include a sending module 1210. The sending module 1210 is configured to send first information to a terminal device, where the first information indicates a type of *M* time-domain units among *N* first time-domain units, the *M* time-domain units satisfy a predefined restriction, a first frequency-domain resource corresponding to each of the *N* first time-domain unit contains a first subband, a type of the first subband is a first type, the first type is UL or DL, and *M* and *N* are positive integers.

In some embodiments, the *M* time-domain units satisfy the predefined restriction as follows. The type of the *M* time-domain units is the first type.

In some embodiments, the *M* time-domain units are the last *M* first time-domain units among the *N* first time-domain units. Alternatively, the *M* time-domain units are the first *M* first time-domain units among the *N* first time-domain units. Alternatively, *L* groups of consecutive first time-domain units are obtained after the *M* time-domain units are removed from the *N* first time-domain units, where *L* is less than or equal to a first value.

In some embodiments, when the first subband is used for UL transmission, the *M* time-domain units are UL time-domain units. Alternatively, when the first subband is used for DL transmission, the *M* time-domain units are DL time-domain units.

In some embodiments, within first time-domain units other than the *M* time-domain units, frequency-domain resources occupied by transmission with the first type do not exceed the first subband. Alternatively, within the *M* time-domain units, frequency-domain resources occupied by transmission with the first type do not exceed the first frequency-domain resource.

In some embodiments, the *M* time-domain units satisfy the predefined restriction as follows. The type of the *M* time-domain units is another type other than the first type.

In some embodiments, when the first subband is used for UL transmission, the *M* time-domain units are DL time-domain units or flexible time-domain units. Alternatively, when the first subband is used for DL transmission, the *M* time-domain units are UL time-domain units or flexible time-domain units. Alternatively, when the first subband is used for UL transmission, the terminal device does not expect the *M* time-domain units to be UL time-domain units. Alternatively, when the first subband is used for DL transmission, the terminal device does not expect the *M* time-domain units to be DL time-domain units.

In some embodiments, indication information for the type of the *M* time-domain units is not effective.

In some embodiments, within the *N* first time-domain units, frequency-domain resources occupied by transmission with the first type do not exceed the first subband.

In some embodiments, the first frequency-domain resource corresponding to each of the *N* first time-domain units further contains a second subband, and a type of the second subband is a second type; and the first type is different from the second type, or the second subband is not configured for UL transmission or DL transmission.

In the technical solutions provided in embodiments of the disclosure, the first information indicates the type of the *M* time-domain units that satisfy the predefined restriction, such that the terminal device can determine at least one first time-domain unit from the *N* first time-domain units based on the type of the *M* time-domain units indicated by the first information, where the at least one first time-domain unit is configured with the first subband. With the predefined restriction, the terminal device and the network device can have a consistent understanding of the *M* time-domain units, thereby avoiding a situation where communication cannot be performed on the *M* time-domain units.

It can be noted that, when the apparatus provided in the foregoing embodiments implements its functions, only the division into the above functional modules is taken an example for illustration. In practice, the above functions can be allocated to different functional modules according to actual needs, that is, the structure of the device is divided into different functional modules to complete all or some of the functions described above.

Regarding the apparatus in the foregoing embodiments, the manner in which each module performs operations has been described in detail in the related method embodiments and thus will not be elaborated again herein.

Reference may be made to FIG. 13, which illustrates a schematic structural diagram of a terminal device provided in an embodiment of the disclosure. The terminal device 1300 may include a processor 1301, a transceiver 1302, and a memory 1303. The transceiver 1302 is configured to implement the function of transmission or reception, such as implement the function(s) of the receiving module 1120. The processor 1301 can be configured to implement other processing functions or control transmission and/or reception, such as implement the function(s) of the processing module 1110.

The processor 1301 includes one or more processing cores, and the processor 1301 executes various functional applications and information processing by running software programs and modules.

The transceiver 1302 may include a receiver and a transmitter. For example, the receiver and the transmitter may be implemented as the same wireless communication component, and the wireless communication component may include a wireless communication chip and a radio frequency (RF) antenna.

The memory 1303 may be connected to the processor 1301 and the transceiver 1302.

The memory 1303 may be configured to store a computer program executed by the processor. The processor 1301 is configured to execute the computer program to implement various steps in the foregoing method embodiments.

In some embodiments, the transceiver 1302 is configured to receive first information, where the first information indicates a type of *M* time-domain units among the *N* first time-domain units, the *M* time-domain units satisfy a predefined restriction, and *M* is a positive integer. The processor 1301 is configured to determine *N* first time-domain units, where a first frequency-domain resource corresponding to each of the *N* first time-domain units contains a first subband, a type of the first subband is a first type, the first type is UL or DL, and *N* is a positive integer.

For details not described in detail in embodiments of the disclosure, reference may be made to the foregoing embodiments, which are not repeated herein.

In addition, the memory may be implemented by any type of volatile or nonvolatile storage device or combination thereof. The volatile or non-volatile storage device includes, but is not limited to, a magnetic disk or an optical disk, an electrically-erasable programmable read-only memory (EEPROM), an erasable programmable ROM (EPROM), a static random access memory (SRAM), a read-only memory (ROM), a magnetic memory, a flash memory, a programmable ROM (PROM).

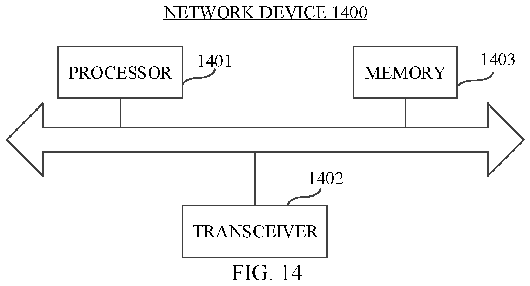

Reference may be made to FIG. 14, which illustrates a schematic structural diagram of a network device provided in an embodiment of the disclosure. The network device 1400 may include a processor 1401, a transceiver 1402, and a memory 1403. The transceiver 1402 is configured to implement the function(s) of the sending module 1210.

The processor 1401 includes one or more processing cores, and the processor 1401 executes various functional applications and information processing by running software programs and modules. The processor 1401 is configured to execute the operations other than transmission and reception performed by the network device in the foregoing method embodiments.

The transceiver 1402 may include a receiver and a transmitter. For example, the receiver and the transmitter may be implemented as the same wireless communication component, and the wireless communication component may include a wireless communication chip and an RF antenna. The transceiver 1402 is configured to execute the transmission and/or reception performed by the network device in the foregoing method embodiments.

The memory 1403 may be connected to the processor 1401 and the transceiver 1402.

The memory 1403 may be configured to store a computer program executed by the processor. The processor 1401 is configured to execute the computer program to implement various steps in the foregoing method embodiments.

In addition, the memory may be implemented by any type of volatile or nonvolatile storage device or combination thereof. The volatile or non-volatile storage device includes, but is not limited to, a magnetic disk or an optical disk, an EEPROM, an EPROM, an SRAM, a ROM, a magnetic memory, a flash memory, a PROM.

In some embodiments, the transceiver 1402 is configured to send first information to a terminal device, where the first information indicates a type of *M* time-domain units among *N* first time-domain units, the *M* time-domain units satisfy a predefined restriction, a first frequency-domain resource corresponding to each of the *N* first time-domain unit contains a first subband, a type of the first subband is a first type, the first type is UL or DL, and *M* and *N* are positive integers.

For details not described in detail in embodiments of the disclosure, reference may be made to the foregoing embodiments, which are not repeated herein.

A computer-readable storage medium is further provided in embodiment of the disclosure. The computer-readable storage medium stores a computer program that is executed by a processor, to implement the method for resource determination at the terminal device side, or to implement the method for resource determination at the network device side. Optionally, the computer-readable storage medium may include an ROM, a random access memory (RAM), a solid state drive (SSD), or an optical disk, etc. The RAM may include a resistance random access memory (ReRAM) and a dynamic random access memory (DRAM).

A chip is further provided in embodiment of the disclosure. The chip includes programmable logic circuits and/or program instructions. The chip, when running, is configured to implement the method for resource determination at the terminal device side, or to implement the method for resource determination at the network device side.

A computer program product is further provided in embodiment of the disclosure. The computer program product includes computer instructions stored in a computer-readable storage medium, and a processor is configured to read and execute the computer instructions stored in the computer-readable storage medium, to implement the method for resource determination at the terminal device side, or to implement the method for resource determination at the network device side.

It can be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association between the two, may mean a relationship of indicating and indicated or configuring and configured, etc.

In some embodiments of the disclosure, the "predefined" can be implemented by pre-saving a corresponding code or table in a device (for example, including a terminal device and an access point (AP)) or in other manners that can be used for indicating related information, and the disclosure is not limited in this regard. For example, the "pre-defined" may mean defined in a protocol.

In some embodiments of the disclosure, the "protocol" may refer to a communication standard protocol, which may include, for example, an LTE protocol, an NR protocol, and a protocol applied to a future communication system, and the disclosure is not limited in this regard.

In the disclosure, the "a plurality of" or "multiple" refers to two or more. The "and/or" describes an association relationship between associated objects, which means that there may be three relationships. For example, A and/or B can mean A alone, both A and B exist, and B alone. The character "/" generally indicates that the associated objects are in an "or" relationship.

In the disclosure, the "greater than or equal to" can mean greater than or equal to, or greater than, and the "less than or equal to" can mean less than or equal to, or less than.

In addition, the serial numbers of the operations described herein only exemplifies one possible execution sequence among the operations. In some other embodiments, the operations may also be executed without following the numbering sequence. For example, two operations with different serial numbers may be executed simultaneously or may be executed in an order reverse to the sequence as illustrated in the figures, which is not limited in embodiments of the disclosure.

Those skilled in the art can appreciate that in one or more of the above examples, the functions described in embodiments of the disclosure may be implemented by hardware, software, firmware, or any combination thereof. When implemented by software, the functions may be stored in a computer-readable medium or transmitted as one or more instructions or codes in the computer-readable medium. The computer-readable medium includes a computer storage medium and a communication medium, where the communication medium includes any medium that facilitates transfer of a computer program from one place to another, and the storage medium may be any available medium that can be accessed by a general-purpose computer or a special-purpose computer.

The foregoing elaborations are merely exemplary embodiments of the disclosure, and are not intended for limiting the disclosure. Any modification, equivalent replacement, and improvement made within the concept and principle of the disclosure shall fall within the protection scope of the disclosure.

## Claims

1. A method for resource determination, performed by a terminal device and comprising:
determining *N* first time-domain units, wherein a first frequency-domain resource corresponding to each of the *N* first time-domain units contains a first subband, a type of the first subband is a first type, the first type is uplink (UL) or downlink (DL), and *N* is a positive integer; and
receiving first information, wherein the first information indicates a type of *M* time-domain units among the *N* first time-domain units, the *M* time-domain units satisfy a predefined restriction, and *M* is a positive integer.

2. The method of claim 1, wherein the *M* time-domain units satisfying the predefined restriction comprises:
the type of the *M* time-domain units being the first type.

3. The method of claim 2, wherein
the *M* time-domain units are last *M* first time-domain units among the *N* first time-domain units; or
the *M* time-domain units are first *M* first time-domain units among the *N* first time-domain units; or
*L* groups of consecutive first time-domain units are obtained after the *M* time-domain units are removed from the *N* first time-domain units, wherein *L* is less than or equal to a first value.

4. The method of claim 2 or 3, wherein
when the first subband is used for UL transmission, the *M* time-domain units are UL time-domain units; or
when the first subband is used for DL transmission, the *M* time-domain units are DL time-domain units.

5. The method of any one of claims 2 to 4, wherein
within first time-domain units other than the *M* time-domain units, frequency-domain resources occupied by transmission with the first type do not exceed the first subband; or
within the *M* time-domain units, frequency-domain resources occupied by the transmission with the first type do not exceed the first frequency-domain resource.

6. The method of claim 1, wherein the *M* time-domain units satisfying the predefined restriction comprises:
the type of the *M* time-domain units being another type other than the first type.

7. The method of claim 1 or 6, wherein
when the first subband is used for UL transmission, the *M* time-domain units are DL time-domain units or flexible time-domain units; or
when the first subband is used for DL transmission, the *M* time-domain units are UL time-domain units or flexible time-domain units; or
when the first subband is used for UL transmission, the terminal device does not expect the *M* time-domain units to be UL time-domain units; or
when the first subband is used for DL transmission, the terminal device does not expect the *M* time-domain units to be DL time-domain units.

8. The method of claim 1, wherein indication information for the type of the *M* time-domain units is not effective.

9. The method of any one of claims 6 to 8, wherein within the *N* first time-domain units, frequency-domain resources occupied by transmission with the first type do not exceed the first subband.

10. The method of any one of claims 1 to 9, wherein the first frequency-domain resource corresponding to each of the *N* first time-domain units further contains a second subband, and a type of the second subband is a second type; and the first type is different from the second type, or the second subband is not configured for UL transmission or DL transmission.

11. A method for resource determination, performed by a network device and comprising:
sending first information to a terminal device, wherein the first information indicates a type of *M* time-domain units among *N* first time-domain units, the *M* time-domain units satisfy a predefined restriction, a first frequency-domain resource corresponding to each of the *N* first time-domain unit contains a first subband, a type of the first subband is a first type, the first type is uplink (UL) or downlink (DL), and *M* and *N* are positive integers.

12. The method of claim 11, wherein the *M* time-domain units satisfying the predefined restriction comprises:
the type of the *M* time-domain units being the first type.

13. The method of claim 12, wherein
the *M* time-domain units are last *M* first time-domain units among the *N* first time-domain units; or
the *M* time-domain units are first *M* first time-domain units among the *N* first time-domain units; or
*L* groups of consecutive first time-domain units are obtained after the *M* time-domain units are removed from the *N* first time-domain units, wherein *L* is less than or equal to a first value.

14. The method of claim 12 or 13, wherein
when the first subband is used for UL transmission, the *M* time-domain units are UL time-domain units; or
when the first subband is used for DL transmission, the *M* time-domain units are DL time-domain units.

15. The method of any one of claims 12 to 14, wherein
within first time-domain units other than the *M* time-domain units, frequency-domain resources occupied by transmission with the first type do not exceed the first subband; or
within the *M* time-domain units, frequency-domain resources occupied by the transmission with the first type do not exceed the first frequency-domain resource.

16. The method of claim 11, wherein the *M* time-domain units satisfying the predefined restriction comprises:
the type of the *M* time-domain units being another type other than the first type.

17. The method of claim 11 or 16, wherein
when the first subband is used for UL transmission, the *M* time-domain units are DL time-domain units or flexible time-domain units; or
when the first subband is used for DL transmission, the *M* time-domain units are UL time-domain units or flexible time-domain units; or
when the first subband is used for UL transmission, the terminal device does not expect the *M* time-domain units to be UL time-domain units; or
when the first subband is used for DL transmission, the terminal device does not expect the *M* time-domain units to be DL time-domain units.

18. The method of claim 11, wherein indication information for the type of the *M* time-domain units is not effective.

19. The method of any one of claims 16 to 18, wherein within the *N* first time-domain units, frequency-domain resources occupied by transmission with the first type do not exceed the first subband.

20. The method of any one of claims 11 to 19, wherein the first frequency-domain resource corresponding to each of the *N* first time-domain units further contains a second subband, and a type of the second subband is a second type; and the first type is different from the second type, or the second subband is not configured for UL transmission or DL transmission.

21. An apparatus for resource determination, comprising:
a processing module configured to determine *N* first time-domain units, wherein a first frequency-domain resource corresponding to each of the *N* first time-domain units contains a first subband, a type of the first subband is a first type, the first type is uplink (UL) or downlink (DL), and *N* is a positive integer; and
a receiving module configured to receive first information, wherein the first information indicates a type of *M* time-domain units among the *N* first time-domain units, the *M* time-domain units satisfy a predefined restriction, and *M* is a positive integer.

22. The apparatus of claim 21, wherein the *M* time-domain units satisfying the predefined restriction comprises:
the type of the *M* time-domain units being the first type.

23. The apparatus of claim 22, wherein
the *M* time-domain units are last *M* first time-domain units among the *N* first time-domain units; or
the *M* time-domain units are first *M* first time-domain units among the *N* first time-domain units; or
*L* groups of consecutive first time-domain units are obtained after the *M* time-domain units are removed from the *N* first time-domain units, wherein *L* is less than or equal to a first value.

24. The apparatus of claim 22 or 23, wherein
when the first subband is used for UL transmission, the *M* time-domain units are UL time-domain units; or
when the first subband is used for DL transmission, the *M* time-domain units are DL time-domain units.

25. The apparatus of any one of claims 22 to 24, wherein
within first time-domain units other than the *M* time-domain units, frequency-domain resources occupied by transmission with the first type do not exceed the first subband; or
within the *M* time-domain units, frequency-domain resources occupied by the transmission with the first type do not exceed the first frequency-domain resource.

26. The apparatus of claim 21, wherein the *M* time-domain units satisfying the predefined restriction comprises:
the type of the *M* time-domain units being another type other than the first type.

27. The apparatus of claim 21 or 26, wherein
when the first subband is used for UL transmission, the *M* time-domain units are DL time-domain units or flexible time-domain units; or
when the first subband is used for DL transmission, the *M* time-domain units are UL time-domain units or flexible time-domain units; or
when the first subband is used for UL transmission, the terminal device does not expect the *M* time-domain units to be UL time-domain units; or
when the first subband is used for DL transmission, the terminal device does not expect the *M* time-domain units to be DL time-domain units.

28. The apparatus of claim 21, wherein indication information for the type of the *M* time-domain units is not effective.

29. The apparatus of any one of claims 26 to 28, wherein within the *N* first time-domain units, frequency-domain resources occupied by transmission with the first type do not exceed the first subband.

30. The apparatus of any one of claims 21 to 29, wherein the first frequency-domain resource corresponding to each of the *N* first time-domain units further contains a second subband, and a type of the second subband is a second type; and the first type is different from the second type, or the second subband is not configured for UL transmission or DL transmission.

31. An apparatus for resource determination, comprising:
a sending module configured to send first information to a terminal device, wherein the first information indicates a type of *M* time-domain units among *N* first time-domain units, the *M* time-domain units satisfy a predefined restriction, a first frequency-domain resource corresponding to each of the *N* first time-domain unit contains a first subband, a type of the first subband is a first type, the first type is uplink (UL) or downlink (DL), and *M* and *N* are positive integers.

32. The apparatus of claim 31, wherein the *M* time-domain units satisfying the predefined restriction comprises:
the type of the *M* time-domain units being the first type.

33. The apparatus of claim 32, wherein
the *M* time-domain units are last *M* first time-domain units among the *N* first time-domain units; or
the *M* time-domain units are first *M* first time-domain units among the *N* first time-domain units; or
*L* groups of consecutive first time-domain units are obtained after the *M* time-domain units are removed from the *N* first time-domain units, wherein *L* is less than or equal to a first value.

34. The apparatus of claim 32 or 33, wherein
when the first subband is used for UL transmission, the *M* time-domain units are UL time-domain units; or
when the first subband is used for DL transmission, the *M* time-domain units are DL time-domain units.

35. The apparatus of any one of claims 32 to 34, wherein
within first time-domain units other than the *M* time-domain units, frequency-domain resources occupied by transmission with the first type do not exceed the first subband; or
within the *M* time-domain units, frequency-domain resources occupied by the transmission with the first type do not exceed the first frequency-domain resource.

36. The apparatus of claim 31, wherein the *M* time-domain units satisfying the predefined restriction comprises:
the type of the *M* time-domain units being another type other than the first type.

37. The apparatus of claim 31 or 36, wherein
when the first subband is used for UL transmission, the *M* time-domain units are DL time-domain units or flexible time-domain units; or
when the first subband is used for DL transmission, the *M* time-domain units are UL time-domain units or flexible time-domain units; or
when the first subband is used for UL transmission, the terminal device does not expect the *M* time-domain units to be UL time-domain units; or
when the first subband is used for DL transmission, the terminal device does not expect the *M* time-domain units to be DL time-domain units.

38. The apparatus of claim 31, wherein indication information for the type of the *M* time-domain units is not effective.

39. The apparatus of any one of claims 36 to 38, wherein within the *N* first time-domain units, frequency-domain resources occupied by transmission with the first type do not exceed the first subband.

40. The apparatus of any one of claims 31 to 39, wherein the first frequency-domain resource corresponding to each of the *N* first time-domain units further contains a second subband, and a type of the second subband is a second type; and the first type is different from the second type, or the second subband is not configured for UL transmission or DL transmission.

41. A communication device, comprising:
a memory configured to store a computer program; and
a processor configured to execute the computer program to implement the method of any one of claims 1 to 10 or to implement the method of any one of claims 11 to 20.

42. A computer-readable storage medium storing a computer program that is executed by a processor to implement the method of any one of claims 1 to 10 or to implement the method of any one of claims 11 to 20.

43. A chip comprising programmable logic circuits and/or program instructions, and the chip, when running, being configured to implement the method of any one of claims 1 to 10 or to implement the method of any one of claims 11 to 20.

44. A computer program product comprising computer instructions stored in a computer-readable storage medium, and a processor being configured to read and execute the computer instructions stored in the computer-readable storage medium, to implement the method of any one of claims 1 to 10 or to implement the method of any one of claims 11 to 20.
